# FASCICULE DE BREVET EUROPEEN

(11) **EP 0 908 809 B1**
(45) Date de publication et mention de la délivrance du brevet: **16.07.2003**
(21) Numéro de dépôt: 98402434.9
(22) Date de dépôt: 02.10.1998
(51) Int. Cl.: G05D 23/02, F01P 7/16

(54) **Clapet surmoulé, notamment pour thermostat, et thermostat muni d'un tel clapet**
Umgossener Ventilkörper insbesondere für ein Thermostatventil und Thermostatventil damit
Overmoulded closure member, particularly for a thermostatic valve and thermostatic valve with such a closure member

(30) Priorité: 10.10.1997 FR 9712711
(43) Date de publication de la demande: 14.04.1999
(73) Titulaire: VERNET S.A., 91291 Arpajon Cédex (FR)
(72) Inventeur: Chamot, Jean, 91290 Arpajon (FR); Olivain, Vincent, 91190 Gif sur Yvette (FR)
(74) Mandataire: Jacobson, Claude

(56) Documents cités:
- EP-A- 0 286 810
- EP-A- 0 485 254
- EP-A- 0 716 367
- FR-A- 1 460 357

## Description

L'invention concerne les clapets comprenant un insert et un enrobage surmoulé par exemple en matériau élastique, notamment les clapets étanches pour les thermostats de régulation des circuits de refroidissement des moteurs des véhicules automobiles, ainsi que les thermostats équipés d'un tel clapet.

Ces clapets sont à l'heure actuelle réalisés par surmoulage d'un élastomère sur un insert métallique, après encollage de l'insert de telle sorte que celui-ci résiste à l'arrachement et au décollage par le flux de liquide de refroidissement qui circule à haute température et à grande vitesse lorsque le clapet est très peu ouvert. Ces clapets sont connus par FR-A-1 460 357.

Ces clapets sont onéreux car l'encollage doit être effectué très soigneusement, et le surmoulage doit être réalisé sur des presses spécifiques dont l'automatisation est difficile par suite de la rupture de flux dans le procédé de réalisation due à l'opération d'encollage.

Le document EP-A-0 716 367 décrit également un système de clapet formé d'un insert enrobé, dans lequel l'enrobage est maintenu en pression contre l'insert par un élément élastique uniquement d'un côté, de sorte que la réalisation d'un tel clapet requiert forcément une étape de collage ou de fixation par sertissage.

L'invention a pour but de remédier à ces inconvénients et concerne à cet effet un clapet notamment pour thermostat, comprenant un insert et un enrobage surmoulé solidarisé à l'insert, cet insert comportant au moins une région de forme générale cylindrique à une extrémité de laquelle se raccorde une portée pour un élément thermostatique, cette portée s'étendant vers l'extérieur de la région cylindrique, une bride reliée à cette portée en s'étendant également vers l'extérieur, et un rebord prolongeant la bride, clapet caractérisé en ce que l'enrobage enveloppe au moins partiellement l'insert par l'extérieur, en le recouvrant au moins depuis une face de la portée tournée en direction opposée à celle dans laquelle s'étend la région cylindrique, qu'il recouvre au moins partiellement, et au moins jusqu'à une face de la bride qui est du côté de cette région cylindrique, afin de résister au décollage et à l'arrachement par un fluide traversant le thermostat.

Grâce au fait que l'insert est entouré sur presque toute sa surface par le matériau d'enrobage, on évite la nécessité d'encoller l'insert et l'on peut d'une part augmenter la cadence de production et d'autre part réaliser des clapets dont le matériau d'enrobage élastique ou de faible dureté n'est pas du caoutchouc.

Le clapet selon l'invention peut présenter une ou plusieurs des caractéristiques suivantes :
- la portée et la bride sont reliées l'une à l'autre directement et s'étendent dans un même plan radialement vers l'extérieur de la région de forme générale cylindrique, et l'enrobage recouvre l'insert depuis une face de sa portée, à partir de cette région cylindrique, vers l'extérieur, jusqu'à la face opposée de cette portée pour aboutir contre la région cylindrique ;
- l'insert comporte au moins deux régions de forme générale cylindrique de diamètres différents reliées par la portée constituée par un épaulement entre ces deux régions cylindriques, la portée et la bride étant elles-mêmes reliées par la région cylindrique de plus grand diamètre, que la bride prolonge vers l'extérieur, et l'enrobage enveloppe au moins partiellement l'insert par l'extérieur en le recouvrant, au moins depuis une face de la portée intérieure à la région cylindrique de plus grand diamètre, qu'il recouvre au moins partiellement, et au moins jusqu'à une face de la bride qui est du côté des régions cylindriques de l'insert
- l'insert comporte, en tant que région d'extrémité, une région de forme générale cylindrique de plus petit diamètre qu'une région de forme générale cylindrique qui est reliée à elle par un épaulement, et le rebord prolongeant la bride est replié vers cette extrémité et présente une forme générale approximativement tronconique dont le diamètre croît en allant vers l'extrémité ;
- la région de l'enrobage qui recouvre une face de la bride qui est du côté des régions de forme cylindrique est en contact avec la surface extérieure de la région de plus grand diamètre ;
- la bride présente des perforations, et l'enrobage bouche ces perforations ;
- l'enrobage présente une région approximativement tronconique recouvrant une face extérieure du rebord de l'insert et constituant la région fonctionnelle du clapet ;
- le clapet comporte un canal annulaire s'ouvrant en direction d'une extrémité de l'insert vers laquelle. s'étend une région de forme générale cylindrique de celui-ci reliée à une région de forme générale cylindrique de plus grand diamètre par un épaulement ;
- l'enrobage est en matériau élastomère ;
- l'enrobage est en matériau thermoplastique élastomère ou de faible dureté.

L'invention concerne également un thermostat comprenant un clapet tel que défini ci-dessus, un élément de boîtier comportant un siège pour le clapet, un élément thermostatique comportant une partie mobile ayant une collerette, et un organe élastique pour rappeler le clapet vers le siège, thermostat caractérisé en ce que la partie mobile de l'élément thermostatique est emmanchée dur dans le clapet, l'enrobage étant maintenu en pression contre l'insert entre l'organe élastique et un épaulement de la collerette.

Grâce au fait que l'enrobage est maintenu en pression contre l'insert, d'un côté par un organe élastique tel qu'un ressort hélicoïdal et de l'autre par la collerette de la partie mobile de l'élément thermostatique, la résistance de l'enrobage à l'arrachement en fonctionnement dans des conditions sévères, est encore accrue.

Le thermostat selon l'invention peut présenter une ou plusieurs des caractéristiques suivantes :
- le thermostat comprend un élément thermostatique comportant une partie mobile ayant une collerette support de clapet, et un organe élastique pour rappeler le clapet vers le siège, la collerette étant emmanchée dur dans l'enrobage, qui est maintenu en pression contre l'insert entre l'organe élastique et un épaulement de la collerette ;
- le siège de l'élément de boîtier est de forme générale tronconique ;
- l'organe élastique est un ressort hélicoïdal présentant une forme générale tronconique ;
- l'organe élastique est un ressort hélicoïdal dont une extrémité est en appui contre la région de l'enrobage qui recouvre une face de la bride qui est du côté de régions de forme générale cylindrique de l'insert, et dont l'autre extrémité est en appui sur une rondelle enfilée autour de la partie mobile de l'élément thermostatique et supportée par un rebord d'appui de l'élément de boîtier en saillie vers l'intérieur de celui-ci.

D'autres caractéristiques et avantages de l'invention ressortiront de la description qui va suivre de formes de réalisation de l'invention données à titre d'exemples non limitatifs et illustrées par les dessins joints sur lesquels :
- la figure 1 est une vue en section diamétrale d'un clapet selon l'invention,
- la figure 2 est une vue de dessus, à une plus petite échelle, de l'insert du clapet de la figure 1,
- la figure 3 est une vue en coupe longitudinale d'un thermostat équipé du clapet de la figure 1, et
- la figure 4 montre en coupe longitudinale une partie des éléments d'un thermostat dans une variante équipée d'une autre forme de réalisation d'un clapet selon l'invention.

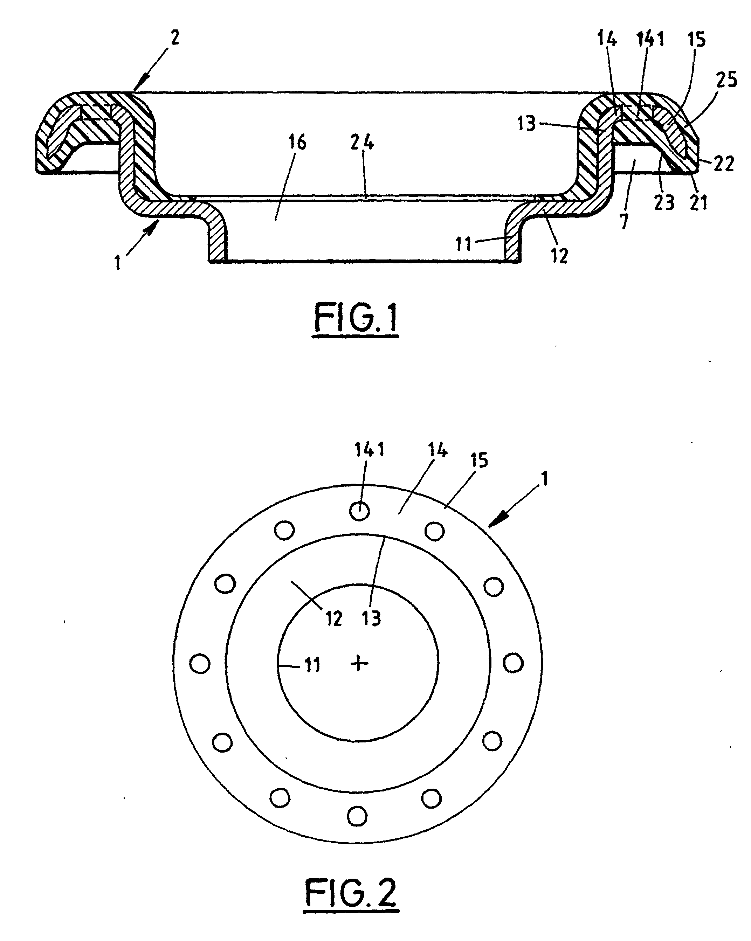

Le clapet de la figure 1 est constitué d'un insert 1 métallique ou en matériau synthétique présentant de bonnes résistances chimique et mécanique et d'un enrobage 2 en matériau élastique ou de faible dureté, surmoulé sans encollage préalable de l'insert.

L'insert 1 se présente ici sous la forme d'un tronçon de tube en tôle métallique comportant deux régions de forme générale cylindrique 11, 13 de diamètres différents s'étendant longitudinalement bout-à-bout autour d'un axe central commun et reliées par un épaulement 12. Tandis que la région de plus petit diamètre 11 constitue l'une des deux régions d'extrémité du clapet, la région de plus grand diamètre 13 est prolongée radialement vers l'extérieur, pour constituer l'autre extrémité de l'insert, par une bride 14 en forme de couronne circulaire elle-même prolongée par un rebord 15 replié vers la première région d'extrémité de l'insert ; ce rebord 15 présente une forme générale approximativement tronconique dont le diamètre croît en allant vers la première extrémité, jusqu'à sa propre extrémité libre qui se termine en biseau.

Les raccordements des différentes régions 11, 12, 13, 14, 15 de l'insert sont arrondis.

La bride 14 présente des perforations 141 circulaires réparties angulairement de manière régulière, par exemple douze perforations réparties à 30 degrés.

L'enrobage 2 épouse la forme de l'insert en le recouvrant continûment depuis la face de l'épaulement 12 intérieure à l'insert, qu'il recouvre de préférence seulement partiellement, sur une partie extérieure de sa surface, jusqu'à la face de la bride 14 qui est tournée du côté des régions de forme générale cylindrique 11, 13 de l'insert, qu'il recouvre entièrement jusqu'à venir en contact avec la surface extérieure de la région 13 de plus grand diamètre. Sur les surfaces de l'insert que recouvre cet enrobage, les surfaces extérieures de l'enrobage ont approximativement la même forme que les surfaces correspondantes de l'insert, mais avec des rayons de raccordement pouvant être différents. Cependant, tandis que l'extrémité libre du rebord 15 tronconique de l'insert se termine, en direction du chant extérieur de l'insert, en biseau relativement effilé dont une surface extérieure est approximativement cylindrique, l'extrémité libre du rebord tronconique de l'enrobage. recouvrant le chant et les deux faces du rebord de l'insert se termine par un plat 21 raccordant deux surfaces en biseau 22, 23 dont l'une, extérieure, est également approximativement cylindrique, ce plat s'étendant en couronne circulaire dans un plan perpendiculaire à l'axe central de l'insert et ainsi de l'enrobage.

Comme l'enrobage 2 ne recouvre la face de l'épaulement 12 intérieure à l'insert 1 que sur une partie extérieure de sa surface, il présente un trou central 24 de diamètre légèrement supérieur au diamètre du trou central 16 de l'insert, permettant l'expansion radiale du matériau élastique qui le constitue, lorsqu'il est soumis à une compression axiale.

Comme cet enrobage est surmoulé, il bouche également les perforations 141 de la bride de l'insert.

Le plan de joint du moule de l'enrobage se situe au niveau de la région de l'enrobage qui recouvre la face de la bride 14 de l'insert qui est du côté des régions de forme générale cylindrique 11, 13 de celui-ci.

La région fonctionnelle du clapet est une région approximativement tronconique 25 de l'enrobage, qui recouvre la face extérieure du rebord 15 tronconique de l'insert.

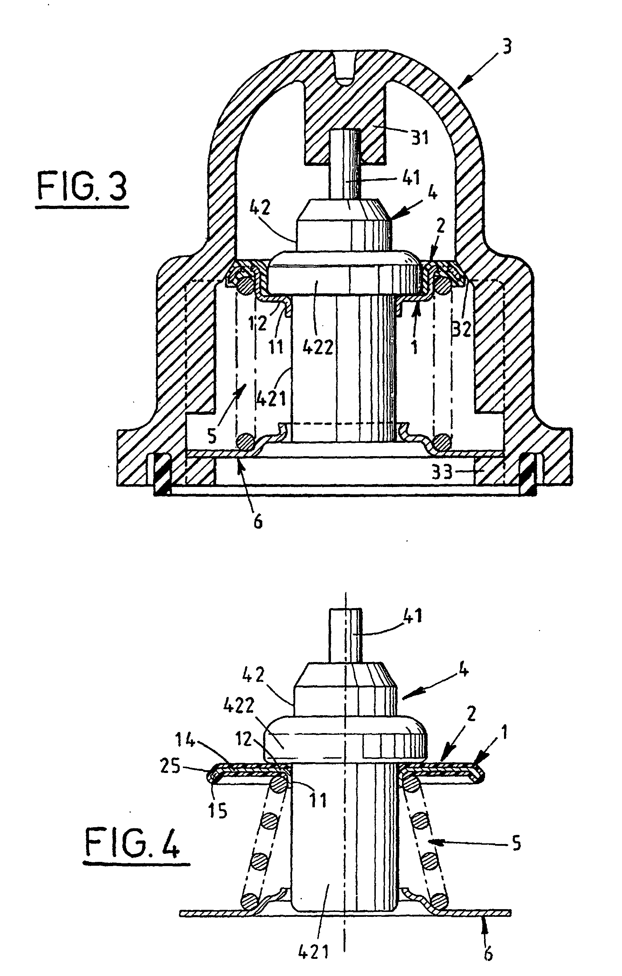

L'élément de boîtier 3 du thermostat de la figure 3, en matériau synthétique, comporte un fond extérieurement en forme de dôme muni intérieurement d'un bossage 31 présentant un logement pour une partie fixe 41 d'un élément thermostatique 4 prenant appui au fond du logement.

Cet élément de boîtier comporte un siège 32 de forme générale tronconique, pour le clapet 1, 2, dont le diamètre va en augmentant en s'éloignant du logement pour la partie fixe de l'élément thermostatique, c'est-à-dire en se rapprochant de l'extrémité ouverte de l'élément de boîtier 3 ; cette extrémité ouverte présente un rebord d'appui 33 pour l'équipage mobile de l'élément thermostatique, en saillie en direction radiale vers l'intérieur de l'élément de boîtier.

La partie mobile 42 de l'élément thermostatique comporte un corps 421 de forme générale cylindrique, à l'opposé de la partie fixe 41 logée dans le bossage du fond de l'élément de boîtier, et une collerette 422 support de clapet.

Le clapet est enfilé autour du corps de l'élément thermostatique 4 et la collerette 422 de cet élément est « emmanchée dur » dans la région de l'enrobage qui recouvre la surface intérieure de la région de grand diamètre 13 de l'insert 1 ; de plus, l'épaulement de la collerette 422 qui relie la périphérie de celle-ci au corps 421 est plaqué contre la région de l'enrobage 2 qui recouvre l'épaulement 12 de l'insert, jouant le rôle de portée pour l'élément thermostatique, tandis que le corps est ajusté (également emmanché dur) dans la région de plus petit diamètre 11 de l'insert.

Le clapet est appliqué contre le siège tronconique 32 de l'élément de boîtier par un organe élastique 5 sous la forme d'un ressort hélicoïdal comprimé dont une extrémité est en appui contre la région de l'enrobage qui recouvre la face de la bride 14 de l'insert qui est du côté des régions de forme générale cylindrique de celui-ci et dont l'autre extrémité est en appui sur une rondelle 6 enfilée autour du corps de la partie mobile de l'élément thermostatique de sorte que cette partie mobile puisse coulisser à l'intérieur de cette rondelle, supportée par le rebord d'appui 33 de l'élément de boîtier.

La surface extérieure de la région cylindrique 13 de plus grand diamètre de l'insert et la surface tronconique de l'enrobage qui est en regard forment un canal annulaire 7 dont le fond est constitué par la région de l'enrobage qui recouvre la face de la bride 14 qui est du côté des régions cylindriques et qui s'ouvre du côté de la première extrémité de l'insert, lequel canal permet un bon centrage du ressort hélicoïdal.

Grâce à cette structure, l'enrobage élastique 2 est maintenu en pression contre l'insert 1 d'un côté par le ressort hélicoïdal 5, et de l'autre par la collerette 422 de la partie mobile de l'élément thermostatique, ce qui assure une étanchéité plus hermétique, notamment entre le clapet et l'élément thermostatique.

Le fonctionnement du thermostat ne diffère pas dans son principe de celui des thermostats à clapet conventionnel, puisque à toute augmentation de la température correspond un mouvement d'extension de l'élément thermostatique 4 à l'encontre de l'effort exercé par le ressort 5 sur le clapet 1, 2, et un décollement du clapet par rapport au siège 32 de l'élément de boîtier 3, puis, lorsque la température diminue, le ressort rappelle le clapet vers le siège.

Cette structure permet d'utiliser, pour constituer l'enrobage, soit des élastomères classiques, sans avoir à encoller l'insert métallique, soit des thermoplastiques élastomères (TPE) moulés directement sur des machines standard pour les moulages plastiques, car le TPE ne nécessite pas de vulcanisation, ce qui permet d'obtenir des temps de cycle de fabrication très inférieurs à ceux du moulage élastomère conventionnel, soit encore des thermoplastiques de faible dureté ; de plus, une automatisation peut être réalisée très simplement sans rupture de flux dans le procédé de fabrication.

Bien entendu, l'invention n'est pas limitée à la forme de réalisation ci-dessus décrite et représentée, et on peut en prévoir d'autres sans sortir de son cadre.

Ainsi, dans la forme de réalisation simplifiée représentée sur la figure 4, sur laquelle les éléments correspondant à des éléments des figures précédentes portent les mêmes numéros de référence, comme dans la première forme de réalisation, le clapet comprend un insert 1 et un enrobage 2 surmoulé solidarisé à celui-ci, cet insert comportant au moins une région de forme générale cylindrique à une extrémité de laquelle se raccorde une portée 12 pour un élément thermostatique 4. Cette portée 12 s'étend vers l'extérieur de la région cylindrique 11, une bride 14 est reliée à la portée 12 en s'étendant également vers l'extérieur, et un rebord 15 prolonge la bride 14.

De même, l'enrobage 2 enveloppe partiellement l'insert 1 par l'extérieur, en le recouvrant continûment au moins depuis une face de la portée 12 tournée en direction opposée à celle dans laquelle s'étend la région cylindrique 11 qu'il recouvre au moins partiellement, et au moins jusqu'à une face de la bride 14 qui est du côté de la région cylindrique 11.

Cependant, contrairement à la première forme de réalisation, au lieu de deux régions de forme générale cylindrique, cette forme de réalisation comporte une seule région de forme générale cylindrique 11. Il en résulte que la portée 12 n'est pas un épaulement reliant deux régions cylindriques, et que cette portée 12 et la bride 14 ne sont pas elles-mêmes reliées par l'intermédiaire d'une région cylindrique, mais qu'elles sont en liaison directe, la portée 12 présentant par ailleurs un raccordement arrondi avec la région de forme cylindrique 11.

De plus, l'enrobage 2 recouvre totalement la face de la portée 12 tournée en direction opposée à celle dans laquelle s'étend la région cylindrique 11, et il enveloppe l'insert 1 par l'extérieur au-delà de la face de la bride 14 qui est du côté de la région 11, puisqu'il recouvre même. en totalité la face de la portée 12 qui est du côté de cette région 11, et aboutit contre cette dernière.

L'extrémité du rebord 15 se termine par un chant perpendiculaire à ses faces, et l'enrobage épouse cette forme en recouvrant ce chant extérieur de l'insert 1.

Ici, l'enrobage est d'épaisseur approximativement constante sur toute son étendue.

En ce qui concerne le thermostat, il comprend comme précédemment, en plus du clapet, un élément de boîtier comportant un siège pour le clapet, un élément thermostatique 4 comportant une partie mobile 42 munie d'une collerette 422, et un organe élastique 5 pour rappeler le clapet vers le siège. De même, la partie mobile de l'élément thermostatique 4 est emmanchée dans le clapet, l'enrobage 2 étant maintenu en pression contre l'insert entre l'organe élastique et un épaulement de la collerette.

Cependant, ici, c'est seulement le corps 421 de l'élément thermostatique qui est emmanché dur dans le clapet, et cet emmanchement dur ne se situe pas dans une région de l'enrobage qui recouvre une région de forme générale cylindrique de l'insert, mais directement dans l'unique région de forme générale cylindrique 11 de l'insert 1. Egalement, si l'enrobage est maintenu en position contre l'insert entre un épaulement de la collerette et un organe élastique 5 sous la forme d'un ressort hélicoïdal, ce ressort n'est pas de forme générale cylindrique, mais de forme générale tronconique allant en se rétrécissant jusqu'au clapet ; ainsi l'extrémité rétrécie du ressort est en pression contre l'enrobage dans la région de celui-ci qui recouvre la face de la portée 12 qui est tournée vers la région cylindrique 11, en étant guidée intérieurement par cette région cylindrique, tandis que l'extrémité opposée du ressort est guidée par le pourtour d'une protubérance de la rondelle 6.

## Revendications

1. Clapet notamment pour thermostat, comprenant un insert (1) et un enrobage (2) surmoulé solidarisé à l'insert, cet insert comportant au moins une région de forme générale cylindrique (11) à une extrémité de laquelle se raccorde une portée (12) pour un élément thermostatique, cette portée s'étendant vers l'extérieur de la région cylindrique (11), une bride (14) reliée à cette portée en s'étendant également vers l'extérieur, et un rebord (15) prolongeant la bride, clapet **caractérisé en ce que** l'enrobage (2) enveloppe au moins partiellement l'insert (1) par l'extérieur, en le recouvrant continûment au moins depuis une face de la portée (12), tournée en direction opposée à celle dans laquelle. s'étend la région cylindrique (11), qu'il recouvre au moins partiellement, et au moins jusqu'à une face de la bride (14) qui est du côté de cette région cylindrique, afin de résister au décollage et à l'arrachement par un fluide traversant le thermostat.

2. Clapet selon la revendication 1, **caractérisé en ce que** la portée (12) et la bride (14) sont reliées l'une à l'autre directement et s'étendent dans un même plan radialement vers l'extérieur de la région de forme générale cylindrique (11), et l'enrobage (2) recouvre l'insert (1) depuis une face de sa portée (12), à partir de cette région cylindrique, vers l'extérieur, jusqu'à la face opposée de cette portée pour aboutir contre la région cylindrique (11).

3. Clapet selon la revendication 1, **caractérisé en ce que** l'insert (1) comporte au moins deux régions de forme générale cylindrique (11, 13) de diamètres différents reliées par la portée (12) constituée par un épaulement entre ces deux régions cylindriques, la portée (12) et la bride (14) étant elles-mêmes reliées par la région cylindrique (13) de plus grand diamètre, que la bride prolonge vers l'extérieur, et l'enrobage (2) enveloppe au moins partiellement l'insert par l'extérieur en le recouvrant, au moins depuis une face de la portée (12) intérieure à la région cylindrique (13) de plus grand diamètre, qu'il recouvre au moins partiellement, et au moins jusqu'à une face de la bride (14) qui est du côté des régions cylindriques (11, 13) de l'insert.

4. Clapet selon la revendication 1, **caractérisé en ce que** l'insert (1) comporte, en tant que région d'extrémité, une région de forme générale cylindrique (11) de plus petit diamètre qu'une région de forme générale cylindrique (13) qui est reliée à elle par un épaulement (12), et le rebord (15) prolongeant la bride (14) est replié vers cette extrémité et présente une forme générale approximativement tronconique dont le diamètre croît en allant vers l'extrémité.

5. Clapet selon la revendication 3, **caractérisé en ce que** la région de l'enrobage (2) qui recouvre une face de la bride (14) qui est du côté des régions de forme cylindrique (11, 13) est en contact avec la surface extérieure de la région de plus grand diamètre.

6. Clapet selon la revendication 1, **caractérisé en ce que** la bride (14) présente des perforations (141), et l'enrobage (2) bouche ces perforations.

7. Clapet selon la revendication 1, **caractérisé en ce que** l'enrobage (2) présente une région approximativement tronconique (25) recouvrant une face extérieure du rebord (15) de l'insert et constituant la région fonctionnelle du clapet.

8. Clapet selon la revendication 3, **caractérisé en ce qu'**il comporte un canal annulaire (7) s'ouvrant en direction d'une extrémité de l'insert (1) vers laquelle s'étend une région de forme générale cylindrique (11) de celui-ci reliée à une région de forme générale cylindrique (13) de plus grand diamètre par un épaulement (12).

9. Clapet selon la revendication 1, **caractérisé en ce que** l'enrobage (2) est en matériau élastomère.

10. Clapet selon la revendication 1, **caractérisé en ce que** l'enrobage (2) est en matériau thermoplastique élastomère ou de faible dureté.

11. Thermostat comprenant un clapet selon l'une quelconque des revendications 1 à 10, un élément de boîtier (3) comportant un siège (32) pour le clapet, un élément thermostatique (4) comportant une partie mobile (42) ayant une collerette (422), et un organe élastique (5) pour rappeler le clapet vers le siège, thermostat **caractérisé en ce que** la partie mobile de l'élément thermostatique (4) est emmanchée dur dans le clapet, l'enrobage (2) étant maintenu en pression contre l'insert (1) entre l'organe élastique (5) et un épaulement de la collerette (422).

12. Thermostat selon la revendication 11, comprenant un élément thermostatique (4) comportant une partie mobile (42) ayant une collerette (422) support de clapet, et un organe élastique (5) pour rappeler le clapet vers le siège, thermostat **caractérisé en ce que** la collerette (422) est emmanchée dur dans l'enrobage (2), qui est maintenu en pression contre l'insert (1) entre l'organe élastique (5) et un épaulement de la collerette (422).

13. Thermostat selon la revendication 11, **caractérisé en ce que** le siège (32) de l'élément de boîtier (3) est de forme générale tronconique.

14. Thermostat selon la revendication 11, **caractérisé en ce que** l'organe élastique (5) est un ressort hélicoïdal présentant une forme générale tronconique.

15. Thermostat selon la revendication 11, **caractérisé en ce que** l'organe élastique (5) est un ressort hélicoïdal dont une extrémité est en appui contre la région de l'enrobage (2) qui recouvre une face de la bride (14) qui est du côté de régions de forme générale cylindrique (11, 13) de l'insert (1), et dont l'autre extrémité est en appui sur une rondelle (6) enfilée autour de la partie mobile (42) de l'élément thermostatique (4) et supportée par un rebord d'appui (33) de l'élément de boîtier (3) en saillie vers l'intérieur de celui-ci.

## Patentansprüche

1. Ventil, insbesondere für einen Thermostat, umfassend einen Einsatz (1) und eine mit dem Einsatz einstückige umspritzte Ummantelung (2), wobei dieser Einsatz mindestens einen im Allgemeinen zylinderförmigen Bereich (11) umfasst, an dessen einem Ende sich eine Lagerfläche (12) für ein thermostatisches Element anschließt, wobei sich diese Lagerfläche zur Außenseite des zylindrischen Bereichs (11) gerichtet erstreckt, einen Flansch (14), der mit dieser Lagerfläche verbunden ist, indem er sich ebenfalls nach außen hin erstreckt, und eine Krempe (15), die den Flansch verlängert, wobei das Ventil **dadurch gekennzeichnet ist, dass** die Ummantelung (2) den Einsatz (1) mindestens teilweise von außen her umhüllt, indem sie ihn durchgehend mindestens von einer Seite der Lagerfläche (12) aus bedeckt, die in diejenige Richtung gewandt ist, die derjenigen gegenüberliegt, in der sich der zylindrische Bereich (11) erstreckt, den sie mindestens teilweise bedeckt, und mindestens bis zu einer Seite des Flansches (14), die sich seitens dieses zylindrischen Bereichs befindet, um dem Ablösen und Abreißen durch eine durch den Thermostat gehende Flüssigkeit zu widerstehen.

2. ventil nach Anspruch 1, **dadurch gekennzeichnet, dass** die Lagerfläche (12) und der Flansch (14) unmittelbar miteinander verbunden sind und sich in ein und derselben Ebene radial zur Außenseite des im Allgemeinen zylinderförmigen Bereichs (11) gerichtet erstrecken und die Ummantelung (2) den Eineatz (1) von einer Seite seiner Lagerfläche (12) ab, von diesem zylindrischen Bereich (11) aus nach außen bis zu der dieser Lagerfläche gegenüberliegenden Seite bedeckt, um an dem zylindrischen Bereich (11) auszukommen.

3. Ventil nach Anspruch 1, **dadurch gekennzeichnet, dass** der Einsatz (1) mindestens zwei im Allgemeinen zylinderförmige Bereiche (11, 13) mit verschiedenen Durchmessern umfasst, die über die Lagerfläche (12) verbunden sind, die aus einem Ansatz zwischen diesen beiden zylindrischen Bereichen besteht, wobei die Lagerfläche (12) und der Flansch (14) ihrerseits über den zylindrischen Bereich (13) mit größerem Durchmesser verbunden sind, den der Flansch nach außen verlängert, und die Ummantelung (2) den Einsatz mindestens teilweise von außen her umhüllt, und indem sie ihn mindestens von einer Seite der Lagerfläche (12) aus, die sich innerhalb des zylindrischen Bereichs (13) mit größerem Durchmesser befindet, den sie mindestens teilweise bedeckt, und mindestens bis zu einer Seite des Flansches (14) hin, die sich seitens der zylindrischen Bereiche (11, 13) des Einsatzes befindet, bedeckt.

4. Ventil nach Anspruch 1, **dadurch gekennzeichnet, dass** der Einsatz (1) als Endbereich einen im Allgemeinen zylinderförmigen Bereich (11) umfasst, dessen Durchmesser kleiner ist als der eines im Allgemeinen zylinderförmigen Bereichs (13), der damit über einen Ansatz (12) verbunden ist, und die Krempe (15), die den Flansch (14) verlängert, auf dieses Ende gerichtet umgebogen ist und eine ungefähr kegelstumpfförmige Grundform aufweist, deren Durchmesser nach außen gehend ansteigt.

5. Ventil nach Anspruch 3, **dadurch gekennzeichnet, dass** der Bereich der Ummantelung (2), die eine Seite des Flansches (14) bedeckt, die sich seitens der zylinderförmigen Bereiche (11, 13) befindet, in Kontakt mit der Außenfläche des Bereichs mit größerem Durchmesser steht.

6. Ventil nach Anspruch 1, **dadurch gekennzeichnet, dass** der Flansch (14) Lochungen (141) aufweist und die Ummantelung (2) diese Lochungen verschließt.

7. Ventil nach Anspruch 1, **dadurch gekennzeichnet, dass** die Ummantelung (2) einen ungefähr kegelstumpfförmigen Bereich (25) aufweist, der eine Außenseite der Krempe (15) des Einsatzes bedeckt und den Funktionsbereich des Ventils bildet.

8. Ventil nach Anspruch 3, **dadurch gekennzeichnet, dass** es einen ringförmigen Durchgang (7) umfasst, der in Richtung auf ein Ende des Einsatzes (1) hin offen ist, in die sich ein im Allgemeinen zylinderförmiger Bereich (11) davon erstreckt, der über einen Ansatz (12) mit einem allgemein zylinderförmigen Bereich (13) mit größerem Durchmesser verbunden ist.

9. Ventil nach Anspruch 1, **dadurch gekennzeichnet, dass** die Ummantelung (2) aus einem elastomeren Material besteht.

10. Ventil nach Anspruch 1, **dadurch gekennzeichnet, dass** die Ummantelung (2) aus einem thermoplastischen Material besteht, das elastomer oder von geringer Härte ist.

11. Thermostat, umfassend ein Ventil nach einem der Ansprüche 1 bis 10, ein Gehäuseelement (3), das einen Sitz (32) für das Ventil umfasst, ein thermostatisches Element (4), das einen beweglichen Teil (42) mit einem Kragen (422) umfasst, und ein elastisches Organ (5) zum Rückstellen des Ventils auf den Sitz, wobei der Thermostat **dadurch gekennzeichnet ist, dass** der bewegliche Teil des thermostatischen Elements (4) fest auf das Ventil gedrückt ist, wobei die Ummantelung (2) druckmäßig gegen den Einsatz (1) zwischen dem elastischen Organ (5) und einem Ansatz des Kragens (422) gehalten wird.

12. Thermostat nach Anspruch 11, umfassend ein thermostatisches Element (4), das einen beweglichen Teil (42) mit einem das Ventil tragenden Kragen (422) umfasst, und ein elastisches Organ (5) zum Rückstellen des Ventils auf den Sitz, wobei der Thermostat **dadurch gekennzeichnet ist, dass** der Kragen (422) fest in die Ummantelung (2) gedrückt ist, die druckmäßig gegen den Einsatz (1) zwischen dem elastischen Organ (5) und einem Ansatz des Kragens (422) gehalten wird.

13. Thermostat nach Anspruch 11, **dadurch gekennzeichnet, dass** der Sitz (32) des Gehäuseelements (3) eine kegelstumpfförmige Grundform aufweist.

14. Thermostat nach Anspruch 11, **dadurch gekennzeichnet, dass** das elastische Organ (5) eine Schraubenfeder ist, die eine kegelstumpfförmige Grundform aufweist.

15. Thermostat nach Anspruch 11, **dadurch gekennzeichnet, dass** das elastische Organ (5) eine Schraubenfeder ist, deren eines Ende auf dem Bereich der Ummantelung (2) aufliegt, die eine Seite des Flansches (14) bedeckt, die sich seitens der im Allgemeinen zylinderförmigen Bereiche (11, 13) des Einsatzes (1) befindet, und deren anderes Ende auf einer Unterlegscheibe (6) aufliegt, die um den beweglichen Teil (42) des thermostatischen Elements (4) aufgezogen ist und von einer Stützkrempe (33) des Gehäuseelements (3) getragen wird, die zu dessen Innenseite,gerichtet hervorsteht.

## Claims

1. Valve, particularly for a thermostat, comprising an insert (1) and a moulded-on covering (2) firmly attached to the insert, this insert comprising at least one region of generally cylindrical shape (11) to one end of which is connected a bearing surface (12) for a thermostatic element, this bearing surface extending towards the outside of the cylindrical region (11), a flange (14) connected to this bearing surface also extending outwards, and an edge (15) extending the flange, said valve being **characterised in that** the covering (2) at least partially encases the insert (1) from the outside, continuously covering it at least from one side of the bearing surface (12), facing in the opposite direction to the one in which the cylindrical region (11) extends, which it covers at least partly, and at least as far as a surface of the flange (14) which is on the side of this cylindrical region, in order to withstand being detached and torn off by a liquid passing through the thermostat.

2. Valve according to claim 1, **characterised in that** the bearing surface (12) and the flange (14) are directly connected to one another and extend in the same plane radially towards the outside of the generally cylindrical area (11), and the covering (2) covers the insert (1) from one side of its bearing surface (12), starting from this cylindrical region, outwards, as far as the opposite side of this bearing surface, to abut on the cylindrical region (11).

3. Valve according to claim 1, **characterised in that** the insert (1) comprises at least two generally cylindrical regions (11, 13) of different diameters connected by the bearing surface (12) which consists of a shoulder between these two cylindrical regions, the bearing surface (12) and the flange (14) themselves being connected by the cylindrical region (13) of larger diameter, which is extended outwards by the flange, and the covering (2) at least partially encloses the insert from outside, covering it at least from one side of the bearing surface (12) inside the cylindrical region (13) of larger diameter, which it at least partially covers, and at least as far as a side of the flange (14) which is close to the cylindrical regions (11, 13) of the insert.

4. Valve according to claim 1, **characterised in that** the insert (1) comprises, as its end region, a generally cylindrical region (11) of smaller diameter than a generally cylindrical region (13) which is connected thereto by a shoulder (12), and the edge (15) extending the flange (14) is folded towards this end and is substantially in the shape of a frustum increasing in diameter towards its end.

5. Valve according to claim 3, **characterised in that** the region of the coating (2) which covers one side of the flange (14) which is close to the cylindrical regions (11, 13) is in contact with the outer surface of the larger-diameter region.

6. Valve according to claim 1, **characterised in that** the flange (14) has perforations (141) and the covering (2) blocks these perforations.

7. Valve according to claim 1, **characterised in that** the covering (2) has a substantially frustum-shaped region (25) covering an outer surface of the edge (15) of the insert and constituting the functional region of the valve.

8. Valve according to claim 3, **characterised in that** it comprises an annular channel (7) opening towards one end of the insert (1) towards which extends a generally cylindrical region (11) thereof, connected to a generally cylindrical region (13) of larger diameter by a shoulder (12).

9. Valve according to claim 1, **characterised in that** the covering (2) is an elastomeric material.

10. Valve according to claim 1, **characterised in that** the covering (2) is an elastomeric thermoplastic or low-hardness material.

11. Thermostat comprising a valve according to any one of claims 1 to 10, a housing element (3) comprising a seat (32) for the valve, a thermostatic element (4) comprising a movable part (42) having a collar (422), and a resilient member (5) for returning the valve to the seat, this thermostat being **characterised in that** the movable part of the thermostatic element (4) is force-fitted into the valve, the covering (2) being held under pressure against the insert (1) between the resilient member (5) and a shoulder of the collar (422).

12. Thermostat according to claim 11, with a thermostatic element (4) comprising a movable part (42) having a valve support collar (422), and a resilient member (5) for returning the valve to the seat, this thermostat being **characterised in that** the collar (422) is force-fitted into the covering (2), which is held under pressure against the insert (1) between the resilient member (5) and a shoulder of the collar (422).

13. Thermostat according to claim 11, **characterised in that** the seat (32) of the housing element (3) is generally frustum-shaped.

14. Thermostat according to claim 11, **characterised in that** the resilient member (5) is a generally frustum-shaped helical spring.

15. Thermostat according to claim 11, **characterised in that** the resilient member (5) is a helical spring one end of which bears on the region of the covering (2) which covers one side of the flange (14) which is on the side of generally cylindrical regions (11, 13) of the insert (1), while the other end bears on a washer (6) threaded around the movable part (42) of the thermostatic element and supported by a supporting edge (33) of the housing element (3) projecting into the interior of the latter.
